# FASCICULE DE BREVET EUROPEEN

(11) **EP 0 786 916 B1**
(45) Date de publication et mention de la délivrance du brevet: **11.09.2002**
(21) Numéro de dépôt: 97400107.5
(22) Date de dépôt: 20.01.1997
(51) Int. Cl.: H04Q 7/32

(54) **Procédé de mise à jour de données entre cartes utilisateur dans un système de radiocommunication cellulaire, et terminaux correspondants**
Verfahren zur Datenaktualisierung zwischen Teilnehmerkarten in einem zellularen Funkkommunikationssystem und Endgeräte dafür
Method for updating data between subscriber cards in a cellular radio communication system and terminals therefor

(30) Priorité: 23.01.1996 FR 9600734
(43) Date de publication de la demande: 30.07.1997
(73) Titulaire: ALCATEL, 75008 Paris (FR)
(72) Inventeur: Crozat, Marielle, 78150 Le Chesnay (FR); Pinault, Francis, 92270 Bois-Colombes (FR)
(74) Mandataire: El Manouni, Josiane

(56) Documents cités:
- EP-A- 0 562 890
- EP-A- 0 583 077
- EP-A- 0 675 661
- WO-A-94/30023
- ECHO DES RECHERCHES, no. 139, 1 Janvier 1990, pages 13-20, XP000386290 JOLIE P ET AL: "UNE APPLICATION DE LA CARTE A MICROPROCESSEUR: LE MODULE D'IDENTITE D'ABONNE DU RADIOTELEPHONE NUMERIQUE EUROPEEN"

## Description

Le domaine de l'invention est celui des systèmes de radiocommunication cellulaire avec des terminaux (également appelés stations mobiles). Dans le domaine de la radiocommunication cellulaire, on connaît notamment, en Europe, le standard GSM ("Groupe spécial Systèmes Mobiles publics de radiocommunication fonctionnant dans la bande des 900 Mhz").

Plus précisément, l'invention concerne un procédé de mise à jour de données entre au moins deux cartes utilisateur dans un système de radiocommunication cellulaire, chaque carte utilisateur coopérant avec un terminal distinct. Le procédé de l'invention peut notamment, mais non exclusivement, être mis en oeuvre dans un système GSM.

D'une façon générale, un système de radiocommunication cellulaire est mis en oeuvre au sein d'un réseau de cellules géographiques parcouru par des stations mobiles (ou terminaux). Une station de base est associée à chaque cellule, et une station mobile communique par l'intermédiaire de la station de base associée à la cellule dans laquelle elle se trouve.

Par station mobile ou terminal (les deux termes étant utilisés indifféremment dans la présente description), on entend l'équipement physique utilisé par l'usager du réseau pour accéder aux services de télécommunication offerts. Il existe différents types de terminaux, tels que les mobiles montés sur des véhicules, les portables ou encore les portatifs.

Généralement, quand un terminal est utilisé par un usager, celui-ci doit connecter une carte utilisateur qu'il détient, afin que celle-ci procure au terminal son numéro d'abonné. Ainsi, dans le cas du GSM, la carte utilisateur que l'usager doit connecter au terminal est une carte à mémoire amovible, appelée module d'identification d'abonné (ou SIM en anglo-saxon, pour Subscriber Identity Module), qui procure au terminal son numéro international d'abonné (ou IMSI en anglo-saxon, pour International Mobile Subscriber Identity).

En d'autres termes, toutes les informations individuelles concernant l'abonné sont stockées sur la carte utilisateur (ou carte SIM). Chaque terminal peut donc être utilisé, dans le cas général, avec n'importe quelle carte utilisateur.

Outre le numéro d'abonné, les cartes utilisateur sont amenées à stocker des données propres à l'utilisateur, telles que par exemple répertoires, messages courts, etc. De telles cartes sont décrites par exemple dans l'article : P. JOLIE et al: "Une Application de la carte à microproceseur : le module d'identité d'abonné du radiotéléphone numérique européen ", l'Echo des Recherches, n° 139, 1 janvier 1990, pages 13-20.

L'invention concerne un procédé de mise à jour de telles données entre au moins deux cartes utilisateur.

L'invention s'applique ainsi par exemple au cas où l'opérateur offre à l'usager la possibilité, pour un même abonnement, de disposer d'au moins deux cartes utilisateur. Cette possibilité est très intéressante puisqu'elle permet à l'usager de disposer en permanence d'au moins deux terminaux actifs vis-à-vis du réseau (par exemple un terminal mobile monté sur un véhicule et un terminal portatif). En effet, chaque terminal, qui coopère avec une carte utilisateur distincte, peut dans ce cas être utilisé sans aucune manipulation particulière de l'usager (notamment sans que l'usager insère dans un terminal une carte utilisateur qui auparavant était insérée dans un autre terminal).

Dans ce cas, du fait qu'elles correspondent à un même abonnement, les deux cartes utilisateur sont amenées à stocker des données communes.

Par ailleurs, les données stockées sur les cartes utilisateur peuvent être modifiées pour diverses raisons. Par exemple, l'opérateur peut imposer une période de validité à l'expiration de laquelle toute carte utilisateur doit être restituée à l'opérateur qui en échange fournit à l'usager une nouvelle carte utilisateur. Si l'usager possède deux cartes utilisateur, l'opérateur peut néanmoins ne lui fournir qu'une nouvelle carte utilisateur, par exemple parce que les deux cartes n'ont pas la même période de validité. Par conséquent, l'usager doit recopier d'une façon ou d'une autre le contenu de la nouvelle carte utilisateur dans son autre carte utilisateur, afin que cette dernière constitue une seconde nouvelle carte utilisateur".

De même, au cours de l'utilisation d'un terminal, de nouvelles données (par exemple des messages courts ou des informations de service) sont stockées sur la carte utilisateur avec laquelle coopère ce terminal. Si l'usager possède un autre terminal actif, la carte utilisateur qui coopère avec celui-ci doit être mise à jour, c'est-à-dire doit recevoir ces nouvelles données afin de les stocker. En effet, l'utilisateur doit pouvoir utiliser indifféremment ses deux terminaux, par conséquent les deux cartes utilisateurs associées à ses deux terminaux doivent contenir les mêmes données.

L'invention s'applique également, suivant un autre exemple, au cas d'usagers distincts désirant mettre à jour simultanément des données, dites également données communes, sur leurs cartes utilisateur.

Il convient donc de prévoir un procédé de mise à jour uniforme de données communes à plusieurs cartes utilisateur. En d'autres termes, ce procédé doit permettre, lorsque les données communes stockées sur une carte utilisateur sont mises à jour, que les données communes stockées sur une autre carte utilisateur soient mises à jour de façon identique.

Afin de mettre à jour des données entre deux cartes utilisateur, le procédé connu le plus simple consiste à effectuer une double saisie des données communes. En d'autres termes, lors de la mise à jour, on inscrit d'abord les données communes sur la première carte utilisateur, puis on les inscrit sur la seconde carte utilisateur. Cette première solution présente l'inconvénient majeur d'être longue et fastidieuse à effectuer. De plus, si des erreurs se produisent lors de la double saisie, les données stockées sur les deux cartes ne sont alors plus identiques, ce qui peut engendrer des problèmes pour la gestion de l'utilisation des terminaux.

Une seconde technique connue, qui vise à pallier les inconvénients du procédé connu précité, consiste à munir au moins un des terminaux de moyens de copie du contenu d'une carte utilisateur. Ainsi, lorsqu'on désire qu'une seconde carte utilisateur contienne les mêmes données qu'une première carte utilisateur, on place la première carte utilisateur dans le terminal muni des moyens de copie, puis on active la fonction de copie. Le fonctionnement de cette fonction de copie est le suivant : d'abord le terminal lit et stocke temporairement les données mémorisées sur la première carte utilisateur ; puis on extrait la première carte utilisateur du terminal et on la remplace par la seconde carte utilisateur ; enfin le terminal écrit les données de la première carte utilisateur dans une mémoire de la seconde carte utilisateur.

Cette seconde technique connue présente l'avantage de permettre une copie a priori sans erreur du contenu d'une carte utilisateur. En revanche, elle présente l'inconvénient majeur d'obliger l'usager à manipuler les deux cartes utilisateur et à les faire coopérer l'une après l'autre avec un des deux terminaux (celui sur lequel est disponible la fonction de copie).

L'invention a notamment pour objectif de pallier cet inconvénient majeur de l'état de la technique.

Plus précisément, l'un des objectifs de la présente invention est de fournir un procédé de mise à jour de données entre au moins deux cartes utilisateur dans un système de radiocommunication cellulaire, ce procédé ne nécessitant aucune manipulation de cartes utilisateur de la part de l'usager.

Un objectif complémentaire de l'invention est de fournir un tel procédé pouvant être mis en oeuvre même si les deux terminaux avec lesquels coopèrent les cartes utilisateur sont distants l'un de l'autre.

Un autre objectif de l'invention est de fournir un tel procédé qui permette une mise à jour en temps réel et assure donc une égalité quasi permanente entre les données stockées sur les deux cartes utilisateur.

Encore un autre objectif de l'invention est de fournir un tel procédé qui permette une mise à jour automatique.

Ces différents objectifs, ainsi que d'autres qui apparaîtront par la suite, sont atteints selon l'invention à l'aide d'un procédé de mise à jour de données entre au moins deux cartes utilisateur dans un système de radiocommunication cellulaire, lesdites cartes utilisateur stockant des données communes, ledit procédé étant du type consistant, lorsque des données communes stockées sur une desdites cartes utilisateur, dite première carte utilisateur, sont mises à jour, à mettre à jour de façon identique les données communes stockées sur l'autre desdites cartes utilisateur, dite seconde carte utilisateur, lesdites première et seconde cartes utilisateur coopérant respectivement avec un premier et un second terminal du système de radiocommunication cellulaire,
caractérisé en ce qu'il comprend notamment les étapes successives suivantes :
- le premier terminal lit les données communes mises à jour stockées sur la première carte utilisateur ;
- le premier terminal transfère vers le second terminal, par le système de radiocommunication, les données communes mises à jour qu'il a lues ;
- le second terminal reçoit, par le système de radiocommunication, les données communes mises à jour transférées depuis le premier terminal ;
- le second terminal remplace les anciennes données communes stockées sur la seconde carte utilisateur par les données communes mises à jour reçues.

Ainsi, afin de mettre à jour des données entre deux cartes utilisateur, le principe général de l'invention consiste à effectuer un transfert de ces données entre les deux terminaux avec lesquels coopèrent ces deux cartes utilisateur.

De cette façon, le procédé de l'invention ne nécessite aucune manipulation de cartes utilisateur de la part de l'usager. En effet, la mise à jour des données peut être effectuée tout en laissant chaque carte utilisateur insérée dans son terminal.

Aucune opération de saisie de données n'est par ailleurs exigée de l'usager. Par conséquent, le procédé de l'invention permet une copie a priori sans erreur du contenu d'une carte utilisateur vers une autre.

De plus, le procédé de l'invention peut être mis en oeuvre même si les deux terminaux avec lesquels coopèrent les cartes utilisateur sont distants l'un de l'autre. En effet, le transfert de données entre les deux terminaux implique uniquement que ces derniers puissent communiquer ensemble.

Préférentiellement, la mise à jour des données communes stockées sur la première carte utilisateur consiste soit à recopier le contenu d'une nouvelle première carte utilisateur dans une ancienne première carte utilisateur soit à stocker au moins une nouvelle donnée commune sur la première carte utilisateur.

Le remplacement de carte utilisateur est par exemple imposé par l'opérateur, à l'expiration d'une date de validité. Par ailleurs, le stockage de nouvelles données consiste par exemple à stocker un message court ou toutes autres données de service ou d'exploitation (modification d'un répertoire notamment).

Dans un premier mode de réalisation préférentiel de l'invention, lesdites étapes de transfert par le premier terminal et de réception par le second terminal des données communes mises à jour sont effectuées en utilisant un Service de Messages Courts (SMS, pour "Short Message Service" en anglo-saxon).

Dans un second mode de réalisation préférentiel de l'invention, lesdites étapes de transfert par le premier terminal et de réception par le second terminal des données communes mises à jour sont effectuées en utilisant un Service de Transmission de Données (STD).

Ainsi, dans ces deux modes de réalisation préférentiels de l'invention, le service de transfert de données utilisé (SMS ou STD) permet aux deux terminaux de communiquer entre eux, indépendamment des fonctions habituelles offertes par ces terminaux.

Ces deux services (SMS et STD) sont par exemple mis en oeuvre selon des techniques décrites dans les recommandations GSM séries 2, 3, 4 et 7. Dans un cas comme dans l'autre, le réseau doit comporter, au niveau système, des moyens de routage adéquats.

De façon avantageuse, ledit procédé est effectué de façon automatique, à des instants définis selon une stratégie prédéterminée de mise à jour.

Avantageusement, ladite stratégie prédéterminée de mise à jour consiste à mettre à jour les données communes stockées sur la seconde carte utilisateur à chaque fois que les données communes stockées sur la première carte utilisateur sont mises à jour.

Ainsi, le procédé de l'invention permet une mise à jour en temps réel des données entre cartes utilisateur. Ceci assure donc une égalité quasi permanente entre les données stockées sur les deux cartes utilisateur.

Préférentiellement, ledit procédé comprend une étape préalable de fourniture au premier terminal d'une commande de transfert des données communes mises à jour qui sont stockées sur la première carte utilisateur. Avantageusement, ladite commande de transfert est rentrée par un utilisateur du premier terminal sur une interface homme-machine (telle que par exemple un clavier) comprise dans ou reliée au premier terminal.

Préférentiellement, ladite étape de remplacement par le second terminal des anciennes données communes est précédée d'une étape de fourniture au second terminal d'une commande de mise à jour des données communes qui sont stockées sur la seconde carte utilisateur. Avantageusement, ladite commande de mise à jour est rentrée par un utilisateur du second terminal sur une interface homme-machine (telle que par exemple un clavier) comprise dans ou reliée au second terminal.

Lors de ces deux étapes supplémentaires, à savoir celle de fourniture au premier terminal d'une commande de transfert et celle de fourniture au second terminal d'une commande de mise à jour, c'est donc l'usager qui contrôle le déroulement du procédé sur chacun de ses deux terminaux.

L'invention concerne également les terminaux permettant la mise en oeuvre du procédé précité.

Préférentiellement, ledit premier terminal comprend des premiers moyens de mise à jour comprenant :
- des moyens de lecture sur la première carte utilisateur de données à copier;
- des moyens de transfert vers le second terminal, par le système de radiocommunication, des données à copier lues.

Préférentiellement, ledit second terminal comprend des seconds moyens de mise à jour comprenant :
- des moyens de réception de données à copier transférées depuis un autre terminal, par le système de radiocommunication ;
- des moyens d'écriture sur la seconde carte utilisateur des données à copier reçues.

Avantageusement, un même terminal comprend lesdits premiers et seconds moyens de mise à jour, de façon à pouvoir soit mettre à jour un autre terminal, soit être mis à jour par un autre terminal.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un organigramme simplifié d'un mode de réalisation préférentiel du procédé selon l'invention ; et
- la figure 2 présente un schéma simplifié d'un mode de réalisation préférentiel d'un ensemble de deux terminaux et de leurs cartes utilisateurs associées, permettant la mise en oeuvre du procédé de l'invention.

L'invention concerne donc un procédé de mise à jour de données entre une première et une seconde carte utilisateur CU1, CU2 dans un système de radiocommunication cellulaire, ces deux cartes utilisateur stockant des données communes.

D'une façon générale, le procédé consiste, lorsque des données communes stockées sur la première carte utilisateur CU1 sont mises à jour, à mettre à jour de façon identique les données communes stockées sur la seconde carte utilisateur CU2.

Les première et seconde cartes utilisateur CU1, CU2 coopèrent respectivement avec un premier et un second terminal T1, T2 du système de radiocommunication cellulaire.

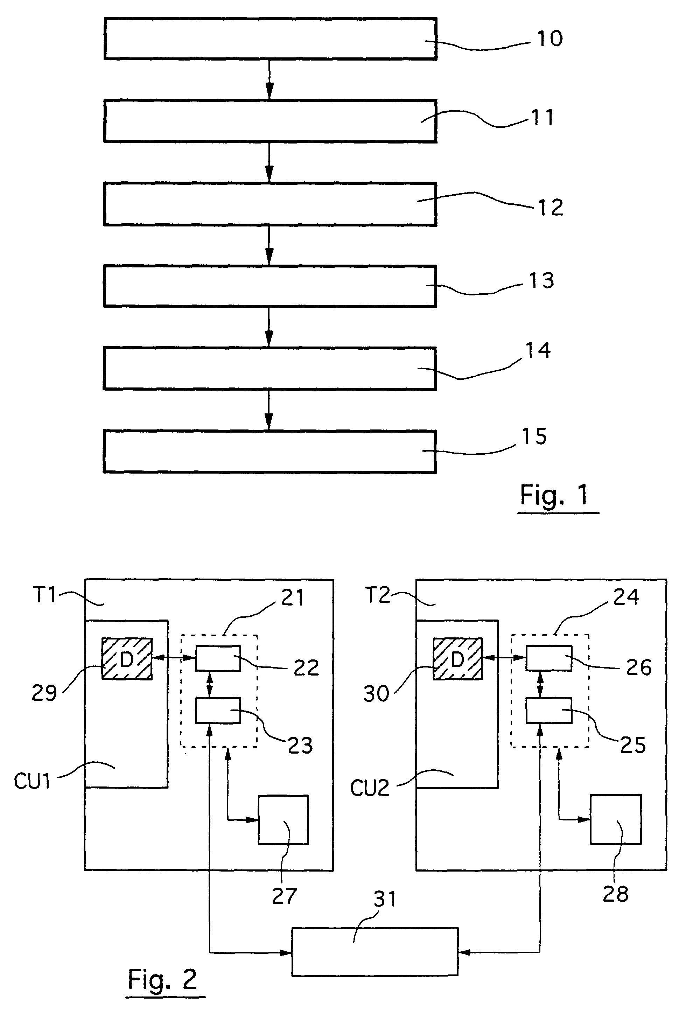

La figure 1 présente un organigramme simplifié d'un mode de réalisation préférentiel du procédé selon l'invention. Dans ce mode de réalisation préférentiel, le procédé comprend notamment les étapes successives suivantes :
- le premier terminal T1 lit (11) les données communes mises à jour D stockées sur la première carte utilisateur CU1 ;
- le premier terminal T1 transfère (12) vers le second terminal T2 les données communes mises à jour D qu'il a lues ;
- le second terminal T2 reçoit (13) les données communes mises à jour D transférées depuis le premier terminal T1 ;
- le second terminal T2 remplace (15) les anciennes données communes stockées sur la seconde carte utilisateur par les données communes mises à jour reçues D.

Ce procédé est par exemple effectué de façon automatique, à chaque fois que les données communes stockées sur la première carte utilisateur sont mises à jour.

La figure 2 présente un schéma simplifié d'un mode de réalisation préférentiel des premier et second terminaux T1, T2 coopérant avec leurs première et secondes cartes utilisateurs associées CU1, CU2.

Le premier terminal T1 comprend des premiers moyens 21 de mise à jour comprenant :
- des moyens 22 de lecture, dans une zone mémoire 29 de la première carte utilisateur CU1, de données à copier D ;
- des moyens 23 de transfert vers le second terminal T2 des données à copier lues D.

Le second terminal T2 comprend des seconds moyens 24 de mise à jour comprenant :
- des moyens 25 de réception de données à copier D transférées depuis le premier terminal T1 ;
- des moyens 26 d'écriture, dans une zone mémoire 30 de la seconde carte utilisateur CU2, des données à copier reçues D.

Les zones mémoire 29 et 30 sont par exemple identifiées par l'usager à partir d'une interface homme-machine (telle que par exemple un clavier) comprise dans, ou reliée, au terminal correspondant.

Sur la figure 2, chaque terminal T1, T2 comprend uniquement des premiers 21 ou des seconds 24 moyens de mise à jour. Ceci correspond à la situation où les données sont toujours mises à jour d'abord sur la première carte utilisateur CU1, avant d'être copiées sur la seconde carte utilisateur CU2.

Il est clair que l'invention concerne également le cas où chaque terminal comprend les premiers et les seconds moyens de mise à jour présentés ci-dessus. Ainsi, chaque terminal peut aussi bien mettre à jour un autre terminal qu'être mis à jour par un autre terminal.

Dans l'organigramme de la figure 1, le procédé comprend également deux étapes supplémentaires, à savoir :
- une étape préalable (10) de fourniture au premier terminal T1 d'une commande de transfert des données communes mises à jour qui sont stockées sur la première carte utilisateur CU1 ; et
- une étape (14) de fourniture au second terminal T2 d'une commande de mise à jour des données communes qui sont stockées sur la seconde carte utilisateur CU2. Cette étape (14) précède l'étape (13) de remplacement par le second terminal T2 des anciennes données communes.

La commande de transfert est par exemple rentrée par un utilisateur du premier terminal T1 sur une interface homme-machine, telle que par exemple un clavier 27 compris dans le premier terminal T1. La commande de mise à jour est par exemple rentrée par un utilisateur du second terminal T2 sur une interface homme-machine, telle que par exemple un clavier 28 compris dans le second terminal T2. Cette commande de mise à jour pourrait aussi par exemple être transmise depuis le premier terminal T1.

Selon une variante, les interfaces homme-machine, telles que par exemple claviers, permettant de rentrer les commandes de transfert et de mise à jour ne sont pas incorporées aux premier et second terminaux respectivement mais sont reliés à ces derniers. En d'autres termes, l'utilisateur peut rentrer les commandes depuis des équipements (par exemple des micro-ordinateurs du type PC) raccordés à ses terminaux.

Les étapes de transfert (12) par le premier terminal T1 et de réception (14) par le second terminal T2 des données communes mises à jour D sont effectuées en utilisant un support de communication 31 particulier, à savoir soit un Service de Messages Courts (SMS), soit un Service de Transmission de données (STD).

Ces deux services sont définis notamment dans les recommandations GSM séries 2, 3, 4 et 7. Le SMS est un service permettant d'envoyer, sans réservation de ressources préalable, des messages aux terminaux par l'intermédiaire d'un serveur spécialisé. Le STD, comme le Service de Transmission de Voix, s'appuie sur l'ouverture de communications de trafic avec pour chacune une réservation de ressources préalable.

Pour la mise en oeuvre du procédé de l'invention, le SMS est par exemple utilisé de la façon suivante : le premier terminal transmet au serveur spécialisé les coordonnées du second terminal ainsi que les données communes mises à jour à transmettre, puis le serveur spécialisé envoie des messages courts destinés au second terminal et contenant les données communes mises à jour D.

Pour la mise en oeuvre du procédé de l'invention, le STD est par exemple utilisé de la façon suivante : le premier terminal établit une communication de trafic avec le second terminal, puis transmet les données communes mises à jour D au second terminal à travers cette communication de trafic.

On distingue maintenant quatre situations possibles :
- situation n° 1 : les deux cartes utilisateur sont des cartes utilisateur du même abonnement possèdant un même numéro ;
- situation n° 2 : les deux cartes utilisateur sont des cartes utilisateur du même abonnement possèdant un même numéro, mais deux sous-numéros distincts (de tels sous-numéros existent par exemple dans un Réseau Numérique à Intégration de Services) ;
- situation n° 3 : les deux cartes utilisateur sont des cartes utilisateur du même abonnement possèdant chacune un numéro distinct, chaque numéro correspondant à un type de transmission distinct (par exemple, transmission de la voix pour l'un et transmission de données pour lautre);
- situation n°4; les deux cartes utilisateur sont des cartes utilisateur d'abonnements différents.

Dans la situation n° 1, le STD ne peut pas être utilisé puisque les deux cartes utilisateur du même abonnement possèdent un même numéro. En revanche, le SMS peut être utilisé de la façon suivante :
- dans une première phase, le second terminal est détaché du réseau et le premier terminal transmet au serveur spécialisé les coordonnées du second terminal ainsi que les données communes mises à jour à transmettre ;
- dans une seconde phase, le premier terminal est détaché du réseau et le second terminal reçoit du serveur spécialisé les messages courts qui lui sont destinés et qui contiennent les données communes mises à jour D.

Dans les situations n° 2 et 3, le SMS et le STD peuvent être utilisés l'un comme l'autre. En effet, dans ces deux situations, il est possible de jouer sur la pluralité de numéros (ou de sous-numéros) pour avoir simultanément un numéro (ou un sous-numéro) émetteur et un numéro (ou un sous-numéro) récepteur. Pour le SMS comme pour le STD, le système doit bien sûr être adapté afin de détecter et permettre un tel routage particulier entre deux numéros (ou sous-numéros) d'un même abonnement.

Dans la situation n°4, le SMS et le STD peuvent être utilisés l'un comme l'autre.

## Revendications

1. Procédé de mise à jour de données entre au moins deux cartes utilisateur (CU1, CU2) dans un système de radiocommunication cellulaire, lesdites cartes utilisateur stockant des données communes (D), ledit procédé étant du type consistant, lorsque des données communes stockées sur une desdites cartes utilisateur, dite première carte utilisateur (CU1), sont mises à jour, à mettre à jour de façon identique les données communes stockées sur l'autre desdites cartes utilisateur, dite seconde carte utilisateur (CU2), lesdites première et seconde cartes utilisateur coopérant respectivement avec un premier et un second terminal (T1, T2) du système de radiocommunication cellulaire,
comprenant notamment les étapes successives suivantes :
- le premier terminal lit (11) les données communes mises à jour (D) stockées sur la première carte utilisateur ;
- le premier terminal transfère (12) vers le second terminal, par le système de radiocommunication, les données communes mises à jour qu'il a lues ;
- le second terminal reçoit (13), par le système de radiocommunication, les données communes mises à jour transférées depuis le premier terminal ;
- le second terminal remplace (15) les anciennes données communes stockées sur la seconde carte utilisateur par les données communes mises à jour reçues.

2. Procédé selon la revendication 1, **caractérisé en ce que** la mise à jour des données communes (D) stockées sur la première carte utilisateur (CU1) consiste soit à recopier le contenu d'une nouvelle première carte utilisateur dans une ancienne première carte utilisateur, soit à stocker au moins une nouvelle donnée commune sur la première carte utilisateur.

3. Procédé selon l'une quelconque des revendications 1 et 2, **caractérisé en ce que** lesdites étapes de transfert par le premier terminal (12) et de réception par le second terminal (13) des données communes mises à jour sont effectuées en utilisant un Service de Messages Courts.

4. Procédé selon l'une quelconque des revendications 1 et 2, **caractérisé en ce que** lesdites étapes de transfert par le premier terminal (12) et de réception par le second terminal (13) des données communes mises à jour sont effectuées en utilisant un Service de Transmission de données.

5. Procédé selon l'une quelconque des revendications 1 à 4, **caractérisé en ce qu'**il est effectué de façon automatique, à des instants définis selon une stratégie prédéterminée de mise à jour.

6. Procédé selon la revendication 5, **caractérisé en ce que** ladite stratégie prédéterminée de mise à jour consiste à mettre à jour des données communes stockées sur la seconde carte utilisateur à chaque fois que des données communes stockées sur la première carte utilisateur sont mises à jour.

7. Procédé selon l'une quelconque des revendications 1 à 6, **caractérisé en ce qu'**il comprend une étape préalable (10) de fourniture au premier terminal d'une commande de transfert des données communes mises à jour qui sont stockées sur la première carte utilisateur.

8. Procédé selon la revendication 7, **caractérisé en ce que** ladite commande de transfert est rentrée par un utilisateur du premier terminal sur une interface homme-machine (27) comprise dans ou reliée au premier terminal.

9. Procédé selon l'une quelconque des revendications 1 à 8, **caractérisé en ce que** ladite étape (15) de remplacement par le second terminal des anciennes données communes est précédée d'une étape (14) de fourniture au second terminal d'une commande de mise à jour des données communes qui sont stockées sur la seconde carte utilisateur.

10. Procédé selon la revendication 9, **caractérisé en ce que** ladite commande de mise à jour est rentrée par un utilisateur du second terminal sur une interface homme-machine (28) comprise dans ou reliée au second terminal.

11. Terminal (T1) d'un système de radiocommunication cellulaire, du type coopérant avec une carte utilisateur, dite première carte utilisateur (CU1),
avec des premiers moyens (21) de mise à jour comprenant :
- des moyens (22) de lecture sur la première carte utilisateur de données à copier (D) ;
- des moyens (23) de transfert, par le système de radiocommunication, vers le second terminal des données à copier lues,
lesdits premiers moyens (21) de mise à jour permettant la copie dans une autre carte utilisateur, dite seconde carte utilisateur (CU2), de données mises à jour (D) qui sont stockées sur la première carte utilisateur (CU1) et qui sont communes auxdites première et seconde cartes utilisateur, ladite seconde carte utilisateur (CU2) coopérant avec un autre terminal (T2).

12. Terminal (T2) d'un système de radiocommunication cellulaire, du type coopérant avec une carte utilisateur, dite seconde carte utilisateur (CU2),
avec des seconds moyens (24) de mise à jour comprenant :
- des moyens (25) de réception de données à copier (D) transférées depuis un autre terminal (T1) par le système de radiocommunication ;
- des moyens (26) d'écriture sur la seconde carte utilisateur (CU2) des données à copier reçues,
lesdits seconds moyens (24) de mise à jour permettant la copie dans la seconde carte utilisateur (CU2) de données mises à jour (D) qui sont stockées sur une autre carte utilisateur, dite première carte utilisateur (CU1), et qui sont communes auxdites première et seconde cartes utilisateur, ladite première carte utilisateur (CU1) coopérant avec ledit autre terminal (T1).

13. Terminal selon les revendications 11 et 12, **caractérisé en ce qu'**il comprend lesdits premiers et seconds moyens (21, 24) de mise à jour, de façon à pouvoir soit mettre à jour un autre terminal, soit être mis à jour par un autre terminal.

## Patentansprüche

1. Verfahren zur Aktualisierung von Daten zwischen wenigstens zwei Teilnehmerkarten (CU1, CU2) in einem zellularen Funkkommunikationssystem, wobei die Teilnehmerkarten gemeinsame Daten (D) speichern, wobei das Verfahren von dem Typ ist, der darin beruht, wenn auf einer der Teilnehmerkarten, als erste Teilnehmerkarte (CU1) bezeichnet, gespeicherte Daten aktualisiert werden, die auf der anderen Teilnehmerkarte, als zweite Teilnehmerkarte (CU2) bezeichnet, gespeicherten gemeinsamen Daten in gleicher Weise zu aktualisieren, wobei erste und zweiten Teilnehmerkarte jeweils mit einem ersten bzw. zweiten Endgerät (T1, T2) des zellularen Funkkommunikationssystems zusammenwirken, insbesondere mit den folgenden Schritten:
- das erste Endgerät liest (11) die auf der ersten Teilnehmerkarte gespeicherten aktualisierten Daten (D) ;
- das erste Endgerät überträgt (12) an das zweite Endgerät über das Funkkommunikationssystem die aktualisierten gemeinsamen Daten, die es gelesen hat;
- das zweite Endgerät empfängt (13) über das Funkkommunikationssystem die vom ersten Endgerät aus übertragenen aktualisierten gemeinsamen Daten;
- das zweite Endgerät ersetzt (15) die auf der zweiten Teilnehmerkarte gespeicherten alten

2. Verfahren nach Anspruch 1, **dadurch gekennzeichnet, dass** die Aktualisierung der auf der ersten Benutzerkarte (CU1) gespeicherten gemeinsamen Daten (D) darin beruht, den Inhalt einer neuen Teilnehmerkarte auf eine alte erste Teilnehmerkarte zu kopieren oder wenigstens einen neuen gemeinsamen Datenwert auf der ersten Teilnehmerkarte zu speichern.

3. Verfahren nach einem beliebigen der Ansprüche 1 und 2, **dadurch gekennzeichnet, dass** die Schritte des Übertragens der aktualisierten gemeinsamen Daten durch das erste Endgerät (12) und ihres Empfangs durch das zweite Endgerät (13) unter Verwendung eines SMS-Dienstes durchgeführt werden.

4. Verfahren nach einem beliebigen der Ansprüche 1 und 2, **dadurch gekennzeichnet, dass** die Schritte des Übertragens der aktualisierten gemeinsamen Daten durch das erste Endgerät (12) und ihres Empfangs durch das zweite Endgerät (13) unter Verwendung eines Datenübertragungsdienstes durchgeführt werden.

5. Verfahren nach einem beliebigen der Ansprüche 1 bis 4, **dadurch gekennzeichnet, dass** es automatisch zu nach einer vorgegebenen Aktualisierungsstrategie festgelegten Zeitpunkten durchgeführt wird.

6. Verfahren nach Anspruch 5, **dadurch gekennzeichnet, dass** die vorgegebene Aktualisierungsstrategie darin beruht, auf der zweiten Teilnehmerkarte gespeicherte gemeinsame Daten jedesmal zu aktualisieren, wenn auf der ersten Teilnehmerkarte gespeicherte Daten aktualisiert worden sind.

7. Verfahren nach einem beliebigen der Ansprüche 1 bis 6, **dadurch gekennzeichnet, dass** es einen vorherigen Schritt (10) des Lieferns eines Befehls an das erste Endgerät zum Übertragen der auf der ersten Teilnehmerkarte gespeicherten aktualisierten gemeinsamen Daten umfasst.

8. Verfahren nach Anspruch 7, **dadurch gekennzeichnet, dass** der Übertragungsbefehl durch einen Benutzer des ersten Endgeräts an einer in dem ersten Endgerät enthaltenen oder mit ihm verbundenen Mensch/Maschine-Schnittstelle eingegeben wird.

9. Verfahren nach einem beliebigen der Ansprüche 1 bis 8, **dadurch gekennzeichnet, dass** dem Schritt (15) des Ersetzens der alten gemeinsamen Daten durch das zweite Endgerät ein Schritt (14) des Lieferns eines Befehls zur Aktualisierung der auf der zweiten Teilnehmerkarte gespeicherten gemeinsamen Daten an das zweite Endgerät vorangeht.

10. Verfahren nach Anspruch 9, **dadurch gekennzeichnet, dass** der Aktualisierungsbefehl durch einen Benutzer des zweiten Endgeräts an einer in dem zweiten Endgerät enthaltenen oder mit ihm verbundenen Mensch/Maschine-Schnittstelle (28) eingegeben wird.

11. Endgerät (T1) für ein zellulares Funkkommunikationssystem, von dem mit einer Teilnehmerkarte, als erste Teilnehmerkarte (CU1) bezeichnet, zusammenwirkenden Typ, mit ersten Aktualisierungsmitteln (21), welche umfassen:
- Mittel (22) zum Lesen von zu kopierenden Daten (D) auf der ersten Teilnehmerkarte;
- Mittel (23) zum Übertragen von gelesenen zu kopierenden Daten über das Funkkommunikationssystem an das zweite Endgerät,
wobei die ersten Aktualisierungsmittel (21) das Kopieren auf eine andere Teilnehmerkarte, als zweite Teilnehmerkarte (CU2) bezeichnet, von aktualisierten Daten (D) ermöglichen, die auf der ersten Teilnehmerkarte (CU1) gespeichert sind und der ersten und zweiten Teilnehmerkarte gemeinsam sind, wobei die zweite Teilnehmerkarte (CU2) mit einem anderen Endgerät (T2) zusammenwirkt.

12. Endgerät (T2) eines zellularen Funkkommunikationssystems vom Typ, der mit einer Teilnehmerkarte, als zweite Teilnehmerkarte (CU2) bezeichnet, zusammenwirkt, mit zweiten Aktualisierungsmitteln (24), welche umfassen:
- Mittel (25) zum Empfangen von von einem anderen Endgerät (T1 über das Funkkommunikationssystem übertragenen zu kopierenden Daten (D);
- Mittel (26) zum Schreiben der empfangenen zu kopierenden Daten in die zweite Teilnehmerkarte (CU2),
wobei die zweiten Mittel (24) zum Aktualisieren das Kopieren in die zweite Teilnehmerkarte (CU2) von aktualisierten Daten (D) ermöglicht, die auf einer anderen Teilnehmerkarte, als erste Teilnehmerkarte (CU1) bezeichnet, gespeichert sind und die der ersten und zweiten Teilnehmerkarte gemeinsam sind, wobei die erste Teilnehmerkarte (CU1) mit dem anderen Endgerät (T1) zusammenwirkt.

13. Endgerät nach den Ansprüchen 11 und 12, **dadurch gekennzeichnet, dass** es die ersten und die zweiten Aktualisierungsmittel (21, 24) umfasst, so dass es sowohl ein anderes Endgerät aktualisieren als auch von einem anderen Endgerät aktualisiert werden kann.

## Claims

1. A method of updating data between at least two user cards (CU1, CU2) in a cellular radiocommunications system, said user cards storing common data (D), said method being of the type in which, when common data stored on a "first" one of said user cards (CU1) is updated, the method consists in identically updating the common data stored on the "second" one of said user cards (CU2), said first and second user cards co-operating respectively with first and second terminals (T1, T2) of the cellular radiocommunications system;
said method including in particular the following successive steps:
the first terminal reads (11) the updated common data (D) stored on the first user card;
the first terminal transfers (12), via the radiocommunications system, the updated common data that it has read to the second terminal;
the second terminal receives (13), via the radiocommunications system, the updated common data transferred from the first terminal; and
the second terminal replaces (15) the old common data stored on the second user card with the received updated common data.

2. A method according to claim 1, **characterized in that** updating common data (D) stored on the first user card (CU1) consists either in copying the contents of a new first user card onto an old first user card, or in storing at least one new item of common data on the first user card.

3. A method according to claim 1 or 2, **characterized in that** said first terminal transfers (12) said updated common data and said second terminal receives (13) said updated common data by using a Short Message Service.

4. A method according to claim 1 or 2, **characterized in that** said first terminal transfers (12) said updated common data and said second terminal receives (13) said updated common data by using a Data Transmission Service.

5. A method according to any one of claims 1 to 4, **characterized in that** it is performed automatically at instants defined using a predetermined updating strategy.

6. A method according to claim 5, **characterized in that** said predetermined updating strategy consists in updating the common data stored on the second user card each time that common data stored on the first user card is updated.

7. A method according to any one of claims 1 to 6, **characterized in that** it includes a prior step (10) in which the first terminal is supplied with a transfer command to transfer the updated common data that is stored on the first user card.

8. A method according to claim 7, **characterized in that** said transfer command is entered by a user of the first terminal on a man-machine interface (27) contained in or connected to the first terminal.

9. A method according to any one of claims 1 to 8, **characterized in that** said step (15) in which the second terminal replaces the old common data is preceded by a step (14) in which the second terminal is supplied with an update command to update the common data stored on the second user card.

10. A method according to claim 9, **characterized in that** said update command is entered by a user of the second terminal on a man-machine interface (28) contained in or connected to the second terminal.

11. A terminal (T1) of a cellular radiocommunications system, the terminal being of the type co-operating with a user card, referred to as the "first" user card (CU1);
with first updating means (21) comprising:
read means (22) for reading data to be copied (D) from the first user card; and
transfer means (23) for transferring, via the radiocommunications system, the data to be copied that it has read to the second terminal;
said first updating means (21) enabling updated data (D) stored on the first user card (CU1) to be copied onto a "second" user card (CU2), the updated data being common to said first and second user cards, and said second user card (CU2) co-operating with another terminal (T2).

12. A terminal (T2) of a cellular radiocommunications system, the terminal being of the type co-operating with a user card, referred to as the "second" user card (CU2);
with second updating means (24) comprising:
receive means (25) for receiving, via the radiocommunications system, data to be copied (D) transferred from another terminal (T1); and
write means (26) for writing the data to be copied that it has received onto the second user card (CU2);
said second updating means (24) enabling updated data (D) stored on another user card, referred to as the "first" user card (CU1), to be copied onto the second user card (CU2), the updated data being common to said first and second user cards, and said first user card (CU1) co-operating with said other terminal (T1).

13. A terminal according to claims 11 and 12, **characterized in that** it includes both said first and said second updating means (21, 24) so as to be capable either of updating another terminal, or of being updated by another terminal.
